Europäisches Patentamt

European Patent Office

Office européen des brevets

(11) Publication number: **0 200 483**
**B1**

(12) **EUROPEAN PATENT SPECIFICATION**

(45) Date of publication of patent specification: **18.07.90**

(21) Application number: **86303115.9**

(22) Date of filing: **24.04.86**

(51) Int. Cl.⁵: **B 29 C 65/02** // B29L22:00,
B29L23:00, B29K27:06

(54) Tube insert for pouch weld.

(30) Priority: **29.04.85 US 727927**

(43) Date of publication of application:
**05.11.86 Bulletin 86/45**

(45) Publication of the grant of the patent:
**18.07.90 Bulletin 90/29**

(84) Designated Contracting States:
**AT BE CH DE FR GB IT LI LU NL SE**

(56) References cited:
**WO-A-83/01416**
**DE-A-3 030 020**
**FR-A-1 133 731**
**FR-A-2 098 873**
**US-A-2 914 181**
**US-A-3 345 227**

(73) Proprietor: **E.R. Squibb & Sons, Inc.**
**Lawrenceville-Princeton Road**
**Princeton, N.J. 08540-4000 (US)**

(72) Inventor: **Jensen, Ole R.**
**646 Orangeburg Road**
**River Vale New Jersey (US)**

(74) Representative: **Cook, Anthony John et al**
**D. YOUNG & CO. 10, Staple Inn**
**London, WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method for joining a plastics tube to a pouch or the like and, more particularly, to use of a tube insert in such a method so as to permit thinner walled, softer plastic tubes to be effectively welded to pouches or bags.

The prior art containing various proposals for fixing tubes to each other or to various plastics containers. For example, French Patent Specification (FR—A) No. 1133731 published in 1957 shows a method of joining two plastics tubes end-to-end in butted relationships in which an internal stiffening or supporting tube is employed. US Patent Specification (US—A) No. 2914181 (1959) shows a method of connecting a plastics tube to an enlarged tube such as a filter tube or a drip tube. A metal tube is used as an internal mandrel, firstly to act as a dielectric and secondly to act as a relatively rigid internal support. U.S. Patent Specification (US—A) No. 3345227 (1967) shows a neck construction for a container in which a preformed plastics tube is fused to the bag walls, and a stopper is inserted into the tube. Jaw members effect a compression operation. The tube extends within the container so that pressure within the container tends to close that part of the tube. French Patent Specification (FR—A) No. 2098873 (1972) discloses a blood bag having several flexible tubes attached thereto. A short tube having one closed end and one open end is welded between the pouch walls, and can be broken off at a line of weakening by manipulating the pouch. In this way, the contents of the pouch are kept in a clean and sterile state until desired for use, at which time the short tube is broken.

In German Patent Specification (DE—A1) No. 3030020, published 1980, a rather similar break-off tube is included in a blood bottle. A flexible tube extends inside a part of the break-off tube.

International Application No. WO 83/01416, published April 1983, shows a method of making a frangible port protector for a plastics container, e.g. a blood bag. Flexible tubing is placed over a solid mandrel, there being one tube defining a port and having an obturation located inside a second tube or bushing which is interposed beween the first tube and the walls of the bag. By making an encircling cut of predetermined depth, a line of weakness is produced, so enabling a closure cap to be created and then removed by a manual pull. This exposes the obturation which can be punctured with a conventional penetrating spike.

None of these prior patent documents addresses the problem of enabling thin flexible tubes to be securely welded between pouch walls by an inexpensive manufacturing process using simple techniques.

Many types of medical devices, such as urine collection devices, include a tube connected to a collection pouch or bag. The pouch or bag is often adapted to be attached to the leg of the patient with the connecting tube extending along the leg of the patient to the collection pouch.

It is desirable that the connecting tube be as soft and flexible as possible. A softer, more flexible tube is more comfortable and offers less resistance to the movement of the patient. In addition, such a tube is less likely to kink, causing an obstruction through which liquid cannot pass.

It is also necessary that the tube be affixed to the pouch or bag in a manner which provides a physically secure, fluid-tight seal. In order to achieve the necessary seal, radio frequency or heat welding are often utilized, depending upon the materials involved. In particular, heat welding is employed for polyethylene, whereas radio frequency welding is used for polyvinyl-chloride.

Normally, the welding procedure takes place within an openable pair of mating pressure dies or jaws between which the tube-pouch assembly is received. The end portion of the tube is inserted between the walls along the edge of the pouch, prior to insertion of the assembly between the dies. As the dies close, the assembly is subjected to pressure, causing the exterior surface of the tube to be deformed or "pinched." This occurs as small amounts of tube material accumulate at opposite points on the exterior surface of the tube, where the die surfaces meet. The deformation of this material, in conjunction with heat or RF energy imparted by the dies, results in a bond between the pouch walls and the exterior surface of the tube at the points where the accumulated material is present.

If the material from which the tube is composed is a relatively hard material, such as polyethylene, it is difficult to control the tube deformation in order to obtain sufficient amounts of material from the exterior surface of the tube at the points along the die surfaces for a proper weld to be achieved. On the other hand, if the tube is made of material which is relatively soft, such as polyvinylchloride (PVC), or if the walls thereof are too thin, the end portion of the tube may deform to an undesirable extent, such that it is no longer adjacent the die surfaces. This also results in an inadequate weld.

One possible way of overcoming the difficulties associated with welding thin-walled tubes or tubes of soft plastic material is to use a solid cylindrical mandrel made of brass or the like to support the tube during the welding process. Since the tube is generally several feet long, it is not practical to insert the mandrel into the free end and snake it through the entire length of the tube to the end to be welded. Therefore, the welding process must be performed in two separate steps.

First, a short tube segment, usually only a few inches long, is inserted over the mandrel. The segment is welded to the pouch walls with the mandrel in position. After the segment is welded, the mandrel is withdrawn. The remainder of the tube must then be affixed to the welded tube segment in a separate operation. This can be achieved by, for example, welding interengageable connectors to the ends of the tube and the segment, or by forming a seal in some other manner.

The above process is relatively expensive to perform. Moreover, it requires two separate connections where only one is desired, greatly increasing the possibility of an improper connection.

It should be appreciated that the type of medical apparatus here under discussion is normally considered to be disposable. It must therefore be made of inexpensive materials which can be assembled quickly using conventional equipment. The use of a two-step welding process, particularly if interengageable connectors are required, is thus contraindicated.

It is therefore, an aim of the present invention to provide a method for joining the end portion of a relatively deformable tube to a pouch and which permits softer, thinner walled tubes to be securely welded to a pouch or a bag.

In accordance with one aspect of the present invention, there is provided a method for joining the end portion of a relatively deformable tube to a pouch or the like having first and second walls seamed along a peripheral edge portion in a welding tool of the type having mating pressure dies, the method being characterised by the steps of:

(a) forming an inclined leading edge on one end of a non-removable relatively rigid, hollow tubular member;

(b) inserting, into said tube end portion, said hollow tubular member, causing a leading edge thereof to be received in the end portion 12;

(c) locating said end portion between the walls of the pouch with said member aligned with the peripheral edge portions of said walls;

(d) placing the tube-pouch assembly between the dies; and

(e) applying pressure and energy through the dies such that the peripheral edge portion of the walls of the pouch are welded together and to the exterior surface of the end portion of the tube, whereby the relatively rigid member supports the end portion in a relatively non-deformed state.

In accordance with another aspect of the present invention, there is provided a tube and pouch combination, said tube comprising a relatively deformable hollow body having an inner diameter and an end portion, said pouch comprising first and second walls sealed along an edge except at an opening into which said end portion is welded, a hollow tubular insert non-removably mounted within said end portion in alignment with said edge and having an outer diameter substantially equal to the inner diameter of said hollow body, said insert is relatively rigid and is constructed and located to support end portion of the hollow body in a relatively non-deformed condition when the said end portion is welded between said pouch walls, characterised in that said insert comprises an inclined end to facilitate insertion thereof into the hollow body end portion.

The insert may be approximately one inch long and, thus, can be easily inserted into the tube to a suitable depth.

The walls of the tube are preferably approximately in the range of .5 to 1.0 millimeter thick. The tube is preferably composed of soft plastic, such as polyvinylchloride (PVC), but other plastics may also be used. The walls of the pouch are preferably composed of the same material as the tube.

An embodiment of the invention will now be described by way of example with reference to the accompanying drawings in which:

Figure 1 is an exploded isometric view illustrating a tube insert of the present invention and the manner in which same is mounted;

Figure 2 is a partially cut-away side view of a portion of the tube-pouch assembly of Figure 1 situated in the welding tool; and

Figure 3 is a top view taken along line 3—3 of Figure 2.

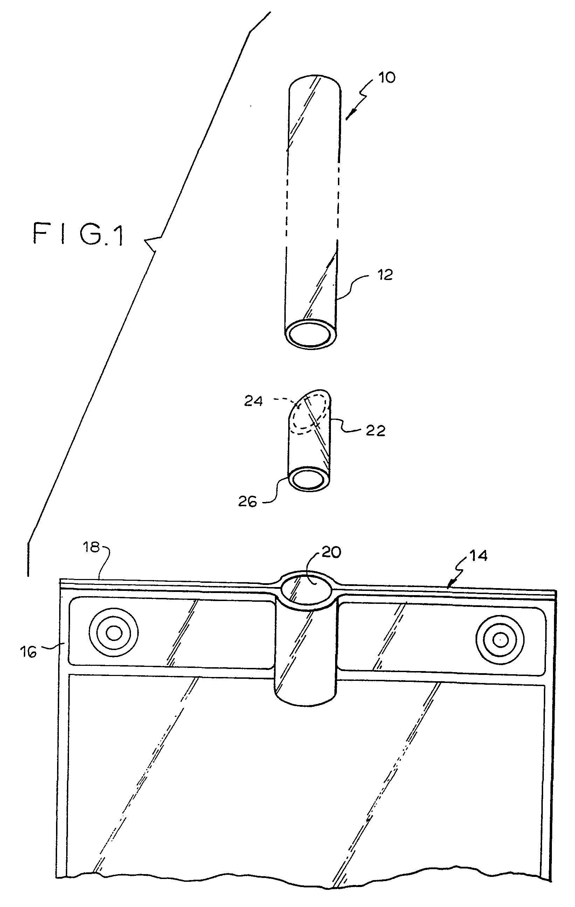

Figure 1 shows a tube 1 in the form of a relatively long hollow body composed of a deformable plastic material. The material is preferably polyvinylchloride, but other plastic compositions may also be employed. The walls of tube 10 are relatively thin, preferably within the range of .5—1.0 mm. thick. One end portion 12 of tube 10 is to be welded to a plastic bag or pouch 14. Pouch 14 is formed by sealing the peripheral edges of first and second layers of thin film 16, 18. Layers 16, 18 are also made of plastic, preferably, the same plastic material as tube 10.

As the peripheral edges of layers 16 and 18 of the pouch are sealed together, tube end portion 12 will be sealed therebetween within an opening 20, at the top of pouch 14. Prior to insertion between layers 16, 18, tube end portion 12 is provided with an insert 22. Insert 22 has a hollow tubular or cylindrical configuration and can be composed of any relatively rigid material such as polyethylene, steel, or the like. The insert is relatively short in length, preferably approximately an inch. Insert 22 has a leading edge 24 which is cut at a bias or an incline with respect to the axis of the insert, so as to form a point and a trailing edge 26 which is cut in a plane generally perpendicular to the axis of the insert. Inclined leading edge 24 facilitates the insertion of insert 22 into tube end 12.

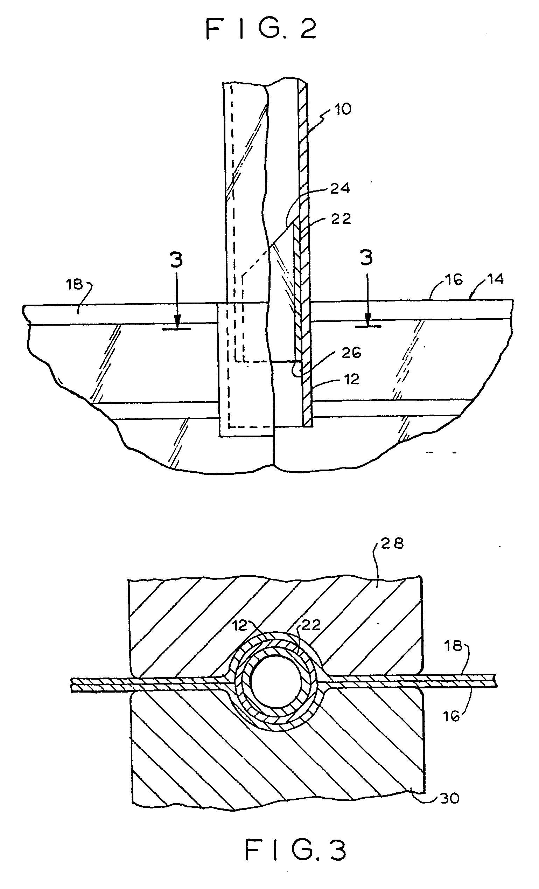

As illustrated in Figure 2, insert 22 is lodged a short distance from the end of portion 12. The depth to which the leading edge 24 of insert 22 is inserted within end portion 12 will be determined by the length of insert 22. The insert must align with the seam to be formed between layers 16 and 18, along the top of pouch 14.

After the insert 22 is received within tube end portion 12 and end portion 12 is located between layers 16 and 18, the tube-pouch assembly is placed between a pair of mating pressure dies or welding jaws 28, 30, as illustrated in Figures 2 and 3. Mating dies 28 and 30 are closed tightly so as to provide the necessary pressure for the welding operation. Radio frequency (RF) or heat energy is applied through the dies 28 and 30 to the assembly such that the seam along the edges of the pouch is formed and end portion 12 is sealed between the top edge of layers 16 and 18. After the welding operation is complete, mating dies 28 and 30 are opened and the assembly removed.

As can best be seen from Figure 3, rigid insert 22 supports the walls of tube end portion 12 in a substantially non-deformed stated when pressure is applied thereto by dies 28 and 30 during the welding process. Accordingly, a physically secure, fluid-tight seal is achieved between the exterior surface of tube end portion 12 and the interior surfaces of layers 16 and 18.

Insert 22 is not removed, but remains within tube end portion 12. Normally, the outer diameter of insert 22 is selected such that a tight friction fit is achieved between the exterior surface of insert 22 and the interior surface of tube end portion 12. This friction fit will prevent insert 22 from being displaced within the tube. However, if desirable, insert 22 can be affixed to the interior surface of end portion 12 by means of an adhesive or the like.

It will now be appreciated that the present-invention relates to a tube insert for a pouch weld which permits the welding of relatively soft, thin-walled plastic tubes to plastic pouches and bags, or the like. The insert is non-removably received within the end portion of the tube which is then inserted between the edges of the layers of the pouch. As the welding operation takes place, the insert supports the tube end portion in a substantially non-deformed state such that a physically secure fluid-tight seal can be achieved in a single welding operation. It should also be appreciated that ocnventional RF or heat welding equipment can be utilized.

While only a single preferred embodiment of the present invention has been disclosed herein for purposes of illustration, it is obvious that many variations and modifications could be made thereto. It is intended to cover all of these variations and modifications which fall within the scope of the present invention.

**Claims**

1. A method for joining the end portion of a relatively deformable tube to a pouch or the like having first and second walls seamed along a peripheral edge portion in a welding tool of the type having mating pressure dies, the method being characterised by the steps of:

(a) forming an inclined leading edge on one end of a non-removable relatively rigid, hollow tubular member 22;

(b) inserting, into said tube end portion 12, said hollow tubular member, causing a leading edge 24 thereof to be received in the end portion 12;

(c) locating said end portion 12 between the walls of the pouch with said member 22 aligned with the peripheral edge portions of said walls 16, 18;

(d) placing the tube-pouch assembly between the dies; and

(e) applying pressure and energy through the dies such that the peripheral edge portion of the walls of the pouch are welded together and to the exterior surface of the end portion 12 of the tube, whereby the relatively rigid member 22 supports the end portion 12 in a relatively non-deformed state.

2. A tube and pouch combination, said tube comprising a relatively deformable hollow body 10 having an inner diameter and an end portion 12, said pouch comprising first and second walls (16, 18) sealed along an edge except at an opening 20 into which said end portion is welded, a hollow tubular insert 22 non-removably mounted within said end portion in alignment with said edge and having an outer diameter substantially equal to the inner diameter of said hollow body 10, said insert 22 is relatively rigid and is constructed and located to support end portion of the hollow body 12 in a relatively non-deformed condition when the said end portion 12 is welded between said pouch walls 16, 18, characterised in that said insert comprises 22 an inclined end to facilitate insertion thereof in the hollow body end portion 12.

3. The combination of claim 2, wherein the walls of said relatively deformable tube are in the range of .5 to 1.0 mm. thick, and said insert 22 is approximately one inch (25.4 mm) long.

4. The combination of claim 2, wherein said hollow body 10 is composed of polyvinylchloride.

5. The combination of claim 1, wherein said pouch walls 16, 18 are composed of polyvinylchloride.

6. The combination of claim 1, wherein said insert 22 is composed of polyethylene.

**Patentansprüche**

1. Verfahren zum Verbinden des Endabschnitts eines relativ verformbaren Rohrs mit einem Beutel oder ähnlichem mit ersten und zweiten Wänden, die entlang eines äußeren Kantenabschnitts mit einer Naht versehen sind, in einem Schweißwerkzeug des Typs, der aufeinanderpaßende Druckformen aufweist, wobei das Verfahren durch die Schritte gekennzeichnet ist:

(a) Ausbilden einer schrägen Führungskante an einem Ende eines nicht entfernbaren relativ starren, hohlen Rohrelements (22),

(b) Einsetzen des hohlen Rohrelements in den genannten Rohrendabschnitt (12), wodurch dessen Führungskante (24) in dem Endabschnitt (12) aufgenommen wird,

(c) Anordnen des Endabschnitts (12) zwischen den Wänden des Beutels, wobei das Element (22) mit den äußeren Kantenabschnitten der Wände (16, 18) ausgerichtet ist,

(d) Einsetzen der Rohr-Beutelanordnung zwischen den Formen, und

(e) Aufbringen von Druck und Energie über die Formen, so daß der äußere Kantenabschnitt der Wände des Beutels miteinander und mit der Außenfläche des Endabschnitts (12) des Rohrs verschweißt werden, wobei das relativ starre Element (22) den Endabschnitt (12) in einem relativ nicht veformten Zustand hält.

2. Rohr und Beutelkombination, wobei das Rohr einen relativ verformbaren hohlen Körper (10) mit einem Innendurchmesser und einen Endabschnitt (12) aufweist, der Beutel erste und zweite Wände (16, 18) aufweist, die entlang einer Kante, ausgenommen einer Öffnung (20), in die der genannte Endabschnitt eingeschweißt wird, abgedichtet sind, ein hohler rohrförmiger Einsatz (22) nicht entfernbar in dem genannten Endabschnitt ausgerichtet mit der Kante befestigt wird und einen Außendurchmesser hat, der im wesentlichen gleich dem Innendurchmesser des hohlen Körpers (10) ist, der Einsatz (22) relativ starr ist und so konstruiert und angeordnet ist, daß der Endabschnitt des hohlen Körpers (12) in einem relativ nicht verformten Zustand gehalten wird, wenn der Endabschnitt (12) zwischen den Beutelwänden (16, 18) eingeschweißt wird, dadurch gekennzeichnet, daß der Einsatz (22) ein schräges Ende aufweist, wodurch dessen Einsetzen in den Endabschnitt (12) des hohlen Körpers erleichtert wird.

3. Kombination von Anspruch 2, wobei die Wände des relativ verformbaren Rohrs eine Dicke im Bereich von 0,5 bis 1,0 mm aufweisen und der Einsatz (22) ungefähr einen Zoll (25,4 mm) lang ist.

4. Kombination nach Anspruch 2, wobei der hohle Körper (10) aus polyvinylchlorid besteht.

5. Kombination nach Anspruch 1, wobei die Beutelwände (16, 18) aus Polyvinylchlorid bestehen.

6. Kombination nach Anspruch 1, wobei der Einsatz (22) aus Polyethylene besteht.

**Revendications**

1. Procédé permettant d'assembler la partie terminale d'un tube relativement déformable à une poche ou à un élément similaire ayant une première et une seconde parois soudées le long d'un bord périphérique, dans un outil de souddage du type comportant des matrices de pression complémentaires, ce procédé étant caractérisé par les étapes suivantes:

(a) formation d'un bord d'attaque incliné sur l'une des extrémités d'un élément tubulaire creux relativement rigide (22), non amovible;

(b) introduction, dans ladite partie terminale (12) du tube, dudit élément tubulaire creux, en faisant en sorte qu'un bord d'attaque (24) de celui-ci vienne se loger dans la partie terminale (12);

(c) mise en place de ladite partie terminale (12) entre les parois de la poche, ledit élément (22) se trouvant dans le prolongement des bords périphériques desdites parois (16, 18);

(d) mise en place de l'ensemble tube-poche entre les matrices; et

(e) application, par l'intermédiaire des matrices, d'une pression et d'une énergie telles que les bords périphériques des parois de la poche sont soudés l'un à l'autre et à la surface extérieure de la partie terminale (12) du tube, l'élément relativement rigide (22) soutenant la partie terminale (12) dans un état relativement non déformé.

2. Ensemble tube-poche, ledit tube comprenant un corps creux relativement déformable (10) ayant un diamètre intérieur et une partie terminale (12), ladite poche comprenant une première et une seconde parois (16, 18) soudées le long d'un bord à l'exception d'une ouverture (20) dans laquelle ladite partie terminale est soudée, une pièce rapportée tubulaire creuse (22) montée non amovible à l'intérieur de ladite partie terminale dans le prolongement dudit bord et ayant un diamètre extérieur sensiblement égal au diamètre intérieur dudit corps creux (10), ladite pièce rapportée (22) est relativement rigide et est construite et placée de façon à soutenir la partie terminale du corps creux (10) dans un état relativement non déformé quand ladite partie terminale (12) est soudée entre lesdites parois (16, 18) de la poche, caractérisé en ce que ladite pièce rapportée (22) présente une extrémité inclinée our faciliter son introduction dans la partie terminale (12) du corps creux.

3. Ensemble selon la revendication 2, dans laquel les parois dudit tube relativement déformable ont une épaisseur de l'ordre de 0,5 à 1,0 mm, et ladite pièce rapportée (22) est longue d'environ 25,4 mm.

4. Ensemble selon la revendication 2, dans lequel ledit corps creux (10) est composé de chlorure de polyvinyle.

5. Ensemble selon la revendication 2, dans lequel lesdites parois (16, 18) de la poche sont composées de chlorure de polyvinyle.

6. Ensemble selon la revendication 2, dans lequel ladite pièce rapportée (22) est composée de polyéthylène.

EP 0 200 483 B1

F I G.1

1

# F I G. 2

# F I G. 3

2